# EUROPEAN PATENT APPLICATION

(11) **EP 4 169 418 A1**
(43) Date of publication of application: **26.04.2023**
(21) Application number: 21824951.4
(22) Date of filing: 16.06.2021
(51) Int. Cl.: A47C 7/74, A47D 13/02, B62B 7/00, B60N 2/56, A47C 27/00, A61G 5/10

(54) **BODY SUPPORTING DEVICE AND FAN UNIT BAG**

(30) Priority: 19.06.2020 JP 2020106374
(71) Applicant: Teijin Limited, Osaka 530-0005 (JP)
(72) Inventor: MIYASAKA, Nobuyoshi, Osaka-shi, Osaka 530-0005 (JP); NAKAMURA, Midori, Tokyo 103-8480 (JP)
(74) Representative: Groth & Co. KB
(86) International application number: PCT/JP2021/022949
(87) International publication number: WO 2021/256523

(57) **Abstract**

According to the present invention, a baby carriage (1) equipped with a backrest part (13b) is further provided with a fan unit bag (2) that is mounted at the rear of the backrest part (13b). The fan unit bag (2) comprises: a fan unit (41) which draws in air from the backrest part (13b); a fan base (42) which is made of a low air-permeability sheet and which supports the fan unit (41) such that the fan unit (41) faces the backrest part (13b); and a fixation part which is disposed so as to surround the fan unit (41) and which detachably mounts the fan base (42) to the backrest part (13b).

## Description

### TECHNICAL FIELD

The present invention relates to a body supporting device and a fan unit bag to which a fan unit is attached in a removable manner.

### BACKGROUND ART

In a stroller serving as a body supporting device, a seat that is a body support where an occupant such as an infant rides on is close to a road surface. Thus, the seat becomes hot during the summer or the like. For this reason, a user may set a small fan unit or the like on the seat of the stroller. Such a fan unit, however, is seldom used in seasons other than summer. A fan unit may be attached to clothing (refer to Patent Literature 1).

### CITATION LIST

### PATENT LITERATURE

Patent Literature 1: Japanese Patent No. 6568611

### SUMMARY OF INVENTION

### Technical Problem

A fan unit has to be stably positioned when attached to the stroller for use so that it will not fall off or change the direction it faces with the person operating the stroller not being aware of such a situation. Nevertheless, it is desirable that the fan unit be easily removable from the stroller.

A fan unit may be used with a body supporting device such as a chair, a sofa, or a wheelchair. Such a fan unit also has to be stably positioned when attached so that it will not fall off or change the direction it faces with the user not being aware of such a situation, while also being easily removable.

It is an objective of the present invention to provide a body supporting device and a fan unit bag that allow for stable attachment of a fan unit, while allowing the fan unit to be easily attached to and removed from a body support.

### Solution to Problem

To achieve the above objective, a body supporting device includes a body support. The body supporting device includes a fan unit bag attached in a removable manner to a rear side of the body support. The fan unit bag includes a fan unit that draws air from the body support, a fan base that supports the fan unit so that the fan unit faces the body support, the fan base being a sheet having low air permeability, and a fastener that attaches the fan base in a removable manner to the body support. The fastener is arranged to surround the fan unit.

The above structure drives the fan unit, which is fixed to the fan base by the fastener that surrounds the fan unit, to discharge moisture and hot air from the body support. The fan unit is stably attached to the body supporting device by the fan unit bag. The fastener allows the fan unit bag to be easily attached to and detached from the body support.

In the body supporting device, the body support includes, for example, a backrest. The backrest may include an inner sheet located closer to a body than the fan unit bag. In this case, preferably, the inner sheet includes a cushion, which supports a back or a head, and, a cover, which covers the cushion.

The above structure arranges the inner sheet including the cushion in the backrest. This improves the riding comfort. The fan unit bag discharges moisture and hot air from the cushion.

In the body supporting device, the cover includes a sheet that is located at a side closer to the body and formed by an air permeable sheet and a sheet located at a side closer to the fan unit bag and formed by a low air permeability sheet. The low air permeability sheet includes a region defining an air permeable portion where air permeability is higher than the low air permeability sheet. Preferably, when the fan unit bag is attached to the backrest, the fan unit is arranged facing the air permeable portion.

The above structure can efficiently discharge air from the entire cushion through the air permeable portion by driving the fan unit even if the backrest includes the inner sheet.

In the body supporting device, the backrest may be located toward a rear side of the body supporting device from a seat and include a shoulder belt. Preferably, in a state where the fan unit bag is attached to the backrest, the fan unit is located between a lower portion of the backrest and an extracted position of the shoulder belt.

Regardless of size such as height of the occupant, at least part of the back of the occupant will rest on a position between the lower portion of the backrest and the extracted position of the shoulder belt. The above structure arranges the fan unit at such a position and efficiently discharges moisture and hot air from the cushion.

In the body supporting device, the backrest may be located toward a rear side of the body supporting device from a seat and include a shoulder belt. Preferably, the air permeable portion is located between a lower portion of the backrest and an extracted position of the shoulder belt. The above structure arranges the air permeable portion between the lower portion of the backrest and the extracted position of the shoulder belt to efficiently discharge moisture and hot air from the cushion.

In the body supporting device, the fan base includes a base portion and a fan attaching portion to where the fan unit is attached. In this case, preferably, the fan attaching portion is folded toward the base portion, with the fan unit attached thereto, and fixed to the base portion. The above structure allows the fan unit to be easily attached to the fan base so that the fan unit is positioned at a predetermined position.

In the body supporting device, a peripheral part of the fan attaching portion, excluding a bent part bordering the base portion, may include a fan fastener that fastens the fan attaching portion to the base portion. The above structure makes the surrounding of the fan attaching portion more airtight and allows air to be discharged further efficiently.

In the body supporting device, preferably, the fan base includes the fastener at a peripheral part of a surface facing the body support and at an intermediate portion extending between two vertical edges on the surface facing the body support. The above structure allows the fan unit bag to be further firmly attached to the backrest and makes the surrounding of the fan unit more airtight.

In the body supporting device, it is preferable that the body support includes a base sheet attached to a frame for forming the body support, the base sheet is an air permeable sheet, and the fan unit bag is attached so that the fan base is adjacent to the base sheet. The above structure forms the fan base with a low air permeability sheet. Thus, even if the fan unit bag is attached to an air permeable inner sheet of the stroller, the fan unit can efficiently discharge moisture and hot air can from the backrest.

In the body supporting device, the backrest may include a base sheet attached to a frame of the body support. In this case, the inner sheet is arranged at a side of the base sheet that is closer to the body, and the fan unit bag is coupled to the inner sheet and the base sheet. The above structure couples the fan unit bag to the inner sheet and the base sheet. Thus, the fan unit bag will resist undesirable separation from the backrest.

In the body supporting device, the fan unit may include a flat portion and a protruding portion protruding opposite the flat portion. In this case, the fan unit is arranged so that the flat portion faces the body support when the fan unit bag is attached to the body support. The above structure softens contact with the body supported by the body support of the fan unit and maintains the sitting comfort, the sleeping comfort, the riding comfort, and the like.

A fan unit bag that achieves the above objective is attached to a rear side of a body support of a body supporting device. The fan unit bag includes a fan unit that draws air from the body support, a fan base that supports the fan unit so that the fan unit faces the body support, in which the fan base is a low air permeability sheet, and a fastener that attaches the fan base in a removable manner to the body support. The fastener is arranged to surround the fan unit.

The above structure allows the fan unit to be easily attached to and detached from the body support in a stable state. Further, the fan base is a low air permeability sheet. Thus, moisture and hot air can be efficiently discharged from the backrest even if the fan unit bag is attached.

### Advantageous Effects of Invention

According to the present invention, the fan unit can be easily attached to and detached from the body support in a state stably attached to the body support.

### BRIEF DESCRIPTION OF DRAWINGS

Fig. 1 is a front perspective view of a stroller.
Fig. 2 is a perspective view illustrating a main part of a fan unit bag in an attached state.
Fig. 3 is a perspective view taken from a front side of the fan unit bag showing a fan unit attached to a fan attaching portion.
Fig. 4 is a perspective view taken from a rear side of the fan unit bag showing the fan unit when being attached to the fan attaching portion.
Fig. 5 is a rear view taken from the rear side of the fan unit bag showing the fan unit attached to the fan attaching portion.
Fig. 6 is a rear view of the fan unit bag showing a state in which the fan attaching portion is folded on a base.
Fig. 7 is a perspective view showing the main part of the fan unit bag in a state attached to a backrest.
Fig. 8 is a perspective view showing the main part of the fan unit bag in a state coupled to an inner sheet and a base sheet.
Fig. 9 is a schematic cross-sectional view illustrating a cooling operation of the fan unit bag.

### DESCRIPTION OF EMBODIMENT

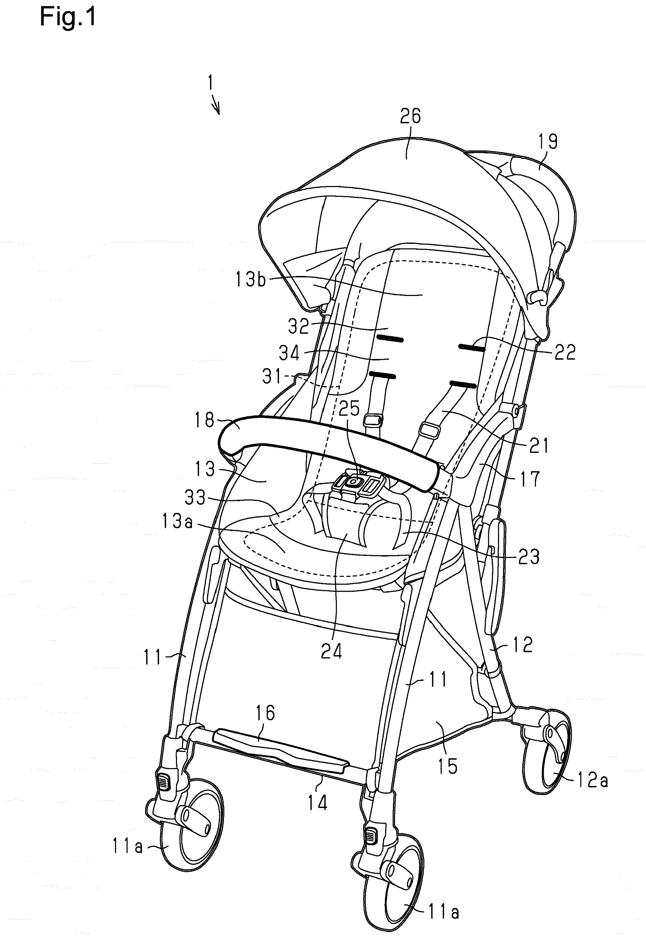

A body supporting device and a fan unit bag in accordance with the present invention will now be described with reference to Figs. 1 to 9.

Fig. 1 shows a single-seat foldable stroller 1 that is an example of the body supporting device and used to carry an infant or the like . The stroller 1 carries an occupant such as an infant in a lying posture or a seated posture. Fig. 1 illustrates a state in which a cushion such as a base sheet and a hood are attached to a frame. Fig. 1 illustrates the stroller 1 in a state in which a handle 19 is located at the rear of the stroller 1 so that the stroller 1 can be pushed from behind. In the following description, the state in which the stroller 1 is pushed from behind is used as a frame of reference. The traveling direction is defined as the front direction, the direction opposite the traveling direction is defined as the rear (back) direction, the lateral direction with respect to the traveling direction is defined as the left-right (widthwise) directions, and the vertical direction with respect to the traveling direction is defined as the up-down directions.

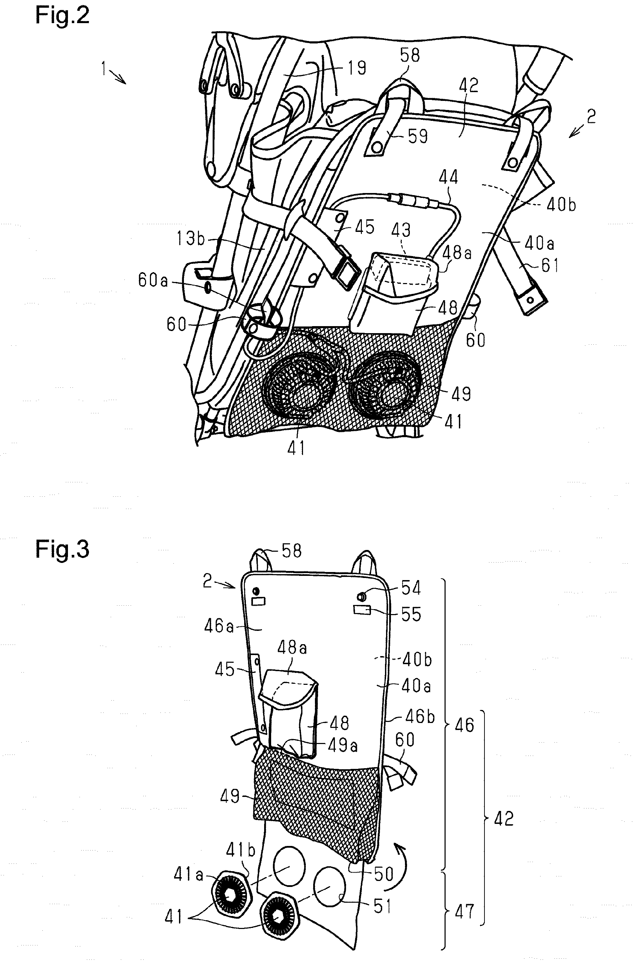

The stroller 1 illustrated in Fig. 1 includes a fan unit bag 2, which is shown in Fig. 2, for attaching a fan unit 41 to the stroller 1. The fan unit bag 2 is attached in a removable manner to the stroller 1.

### Stroller

As illustrated in Fig. 1, the stroller 1 includes a two front leg frames 11, two rear leg frames 12, and a seating unit 13 that carries an occupant such as an infant in a lying posture or a seated posture. The seating unit 13 is a body support that supports the body of the occupant in various postures. Each of the front leg frames 11 has a slightly curved shape and includes a lower end provided with a caster, or front wheel 11a. Each of the rear leg frames 12 has a linear shape and includes a lower end provided with a caster, or rear wheel 12a. A front stay 14 extends between the two front leg frames 11 in the left-right direction. A step 16 is arranged on the front stay 14 and used as a rest for the feet of the seated occupant. The space below the seating unit 13 defines a storage portion 15 where small items can be stored on a net extending between the front leg frame 11 and the rear leg frame 12.

The upper ends of the two front leg frames 11 are pivotally supported by armrests 17. The upper ends of the two rear leg frames 12 are also pivotally supported by the armrests 17. The seating unit 13, which is formed between the two front leg frames 11 and the two rear leg frames 12, includes a seat 13a and a backrest 13b.

The seat 13a is located at a height between the armrest 17 and the front and rear wheels 11a and 12a. Specifically, the seat 13a includes frames, extending in the front-rear direction between the front leg frames 11 and the rear leg frames 12, and a base sheet 31, extending between the side frames. The backrest 13b includes frames coupled to the rear leg frames 12, the side frames, and the like. The base sheet 31 extends between the frames of the backrest 13b. That is, the base sheet 31 is a sheet arranged on the seat 13a and the backrest 13b. An inner sheet 32 is arranged on the base sheet 31.

Shoulder belts 21 having proximal ends fixed to the base sheet 31 extend from the backrest 13b. The inner sheet 32 includes slits 22 from which the shoulder belts 21 can be extracted at different heights in the up-down direction of the backrest 13b. The distal end of each shoulder belt 21 is coupled to a buckle 25 together with a waist belt 23 and a crotch belt 24 that extend from the seat 13a. The buckle 25 is provided at the distal end of the crotch belt 24.

A front guard 18 is attached in a removable manner to distal ends of the armrests 17. The handle 19 for pushing and moving the stroller 1 is located outward from the armrests 17 in the widthwise direction. The handle 19 has the shape of a reversed U as a whole. Furthermore, a hood 26 supported by the handle 19 is arranged on the upper part of the seating unit 13.

The side frames, the front leg frames 11, the rear leg frames 12, the armrests 17, the frames of the backrest 13b, and the handle 19 are moved in cooperation to fold and unfold the stroller 1. Fig. 1 illustrates the unfolded state.

As described above, the seating unit 13 includes the base sheet 31 and the inner sheet 32. The base sheet 31 extends over the seat 13a and above the seat 13a between the frames of the backrest 13b. The base sheet 31 is a flexible sheet having superior flexibility. The base sheet 31 is an air permeable sheet such as a mesh sheet.

The inner sheet 32 includes a seat portion 33 and a backrest portion 34. The seat portion 33 includes a cushion and a cover that accommodates the cushion. In one example, the cushion is a high-repulsion cushion having air permeability and formed by entangled, elastic synthetic resin fibers. Such a cushion is accommodated in a cover formed by sewing a bag from a mesh sheet.

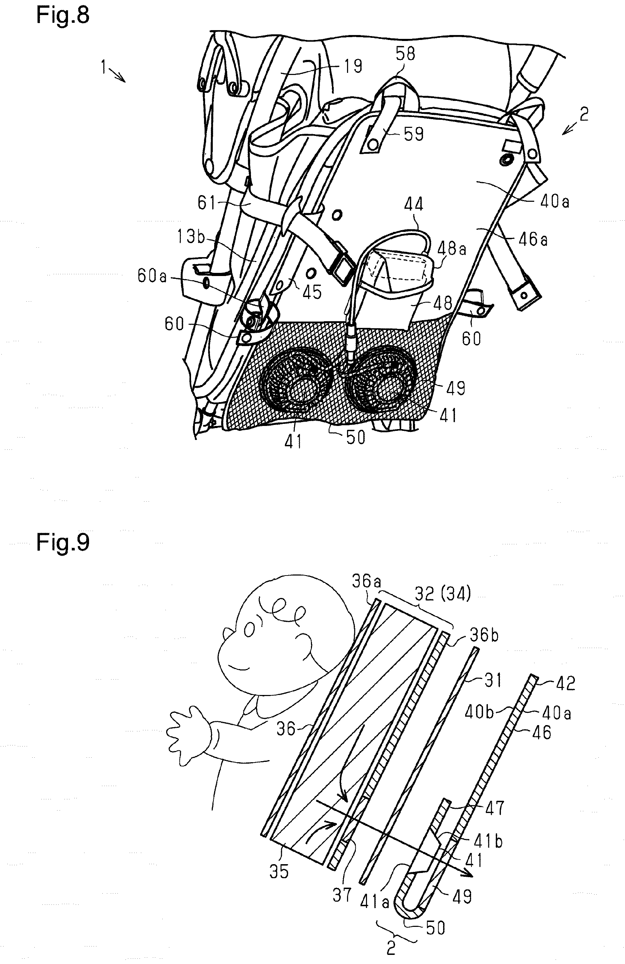

The backrest portion 34 also includes a cushion 35 and a cover 36 that covers the cushion 35 (see Fig. 9). The cushion 35 is separate from the cushion of the seat portion 33. The cover 36 may be continuous with the cover of the seat portion 33 or be separate and stitched to form a cover continuous with the seat portion 33. In this case, the seat portion 33 and the backrest portion 34 are defined by stitching the front and back sheets.

In one example, the cushion 35 of the backrest portion 34 may also by a high-repulsion cushion. A highly-repulsion cushion is more repulsive than a normal cushion formed of a normal non-woven fabric and thus has many voids resulting in high air permeability. The cover 36 includes a surface at the side that contacts the occupant formed by an air permeable sheet 36a, such as a mesh sheet, and a surface at the side of the base sheet 31 formed by a low air permeability sheet 36b having lower air permeability than the air permeable sheet 36a. One example of the low air permeability sheet is a nylon sheet. The low air permeability sheet 36b includes an air permeable portion 37 located at a position lower than where the shoulder belts 21 are extracted from, namely, the lowermost slits 22 and higher than the lower part of the backrest portion 34. That is, the air permeable portion 37 is located between the lowermost slits 22 and the lower part of the backrest portion 34 that is proximate to the seat portion 33. The air permeable portion 37 is formed by, for example, a mesh sheet or a net.

The seat 13a of the seating unit 13 is formed by the seat portion 33 of the inner sheet 32 and the portion of the base sheet 31 extending between the side frames. The backrest 13b is formed by the backrest portion 34 of the inner sheet 32 and the portion of the base sheet 31 extending between the frames of the backrest 13b. The backrest portion 34 supports not only the back of the occupant but also the head of the occupant.

### Fan Unit Bag

As illustrated in Fig. 2, the fan unit bag 2 is attached in a removable manner to the backrest 13b and located at the rear side of the backrest 13b. The fan unit bag 2 includes the fan unit 41 and a fan base 42 that is formed by a sheet and supports the fan unit 41. The fan unit bag 2 further includes a battery pack 43, which supplies power to the fan unit 41, and an output cable 44, which electrically connects the fan unit 41 and the battery pack 43. The fan unit bag 2 includes an outer surface 40a facing the rear of the stroller 1 and an inner surface 40b facing the base sheet 31.

In this example, there are two fan units 41 arranged side by side at the lower side of the fan base 42. Each fan unit 41 includes a motor and a fan that are arranged in a case. Each fan unit 41 has one surface forming a flat portion 41a and an opposite surface forming a protruding portion 41b (see Fig. 3). The fan unit 41 is actuated to draw air from the flat portion 41a and discharge air from the protruding portion 41b.

The battery pack 43 has a rectangular parallelepiped shape. The battery pack 43 includes a rechargeable battery pack, such as, for example, a lithium-ion battery or a nickel-metal hydride battery, and an operating unit for the fan units 41. The operating unit includes a power button for switching power on and off for the fan units 41, a mode selection button for setting the air current generated by the fan, a battery level display section, and a mode display section indicating the present mode. The fan units 41 and the battery pack 43 are electrically connected by the output cable 44. The battery pack 43 includes a controller that executes controls, such as drive control of the fan unit 41 and charge control of the rechargeable battery pack. The controller executes drive control on the fan unit 41 in accordance with an input from the operating unit. The fan unit 41 is controlled by the controller and driven in modes such as a strong mode, a moderate mode, a weak mode, and a turbo mode.

As illustrated in Fig. 3, the fan base 42 includes a base portion 46 and a fan attaching portion 47. The base portion 46 and the fan attaching portion 47 are rectangular sheets and formed by flexible low air permeability sheets that close the mesh of the base sheet 31. The low air permeability sheet may be a sheet of vinyl chloride. In this example, a nylon sheet is used. Approximately three-quarters of the fan base 42 from the top in the longitudinal direction is the base portion 46 and the remaining approximately one-quarter is the fan attaching portion 47.

The base portion 46 is a rectangular region and has substantially the same size as the backrest 13b. One surface of the base portion 46 defines a first surface 46a forming the outer surface 40a of the fan unit bag 2. The first surface 46a includes a pocket 48 that accommodates the battery pack 43 and is located at a longitudinally middle position toward one side in the widthwise direction. The pocket 48 includes a flap 48a that opens and closes an insertion opening. The flap 48a is formed by a transparent waterproof sheet. The flap 48a is closed when the battery pack 43 is accommodated in the pocket 48 to protect the battery pack 43 from rainwater. The battery pack 43 is inserted into the pocket 48 so that the operating unit faces the upper side in order to allow for visual recognition of the operating unit through the flap 48a even when the insertion opening is closed and also allow the operating unit to be operated when the insertion opening is open.

A storage cover 49 is arranged on the first surface 46a of the base portion 46 between the fan attaching portion 47 and the pocket 48. The storage cover 49 has substantially the same size as the fan attaching portion 47. The storage cover 49 may be a net having superior air permeability. Each fan unit 41, in particular, the protruding portion 41b at the discharge side, is arranged at the inner side of the storage cover 49. The storage cover 49, which is formed by a net, does not interfere with the discharge of air. The storage cover 49 is stitched to the first surface 46a. An upper corner of the storage cover 49 located below a cord cover 45 is not stitched to the first surface 46a. The part where the storage cover 49 is not stitched serves as a cable opening 49a through which an output cable 44 from the fan units 41 can be extended.

The fan attaching portion 47 is located at the lower side of the storage cover 49. In the fan attaching portion 47, the surface continuous with the first surface 46a of the base portion 46 faces the base sheet 31when the fan unit bag 2 is attached to the backrest 13b. The fan attaching portion 47 is a rectangular region having substantially the same size as the storage cover 49. The fan attaching portion 47 borders the storage cover 49 at a bent part 50 formed when the fan attaching portion 47 is folded to lap the storage cover 49.

The fan attaching portion 47 includes attachment holes 51 that receive the two fan units 41. The attachment holes 51 are circular holes and arranged side by side in the widthwise direction. In Fig. 3, the fan units 41 are inserted into the attachment holes 51 from the protruding portions 41b.

The upper corners include loops 58. Coupling belts 59 arranged on the upper corners of the inner sheet 32 of the backrest portion 34 are passed through the loops 58. The upper corners of the first surface 46a include studs 54 to which eyelets on the coupling belts 59 are fastened. Base coupling belts 60 passed through loops 60a of the base sheet 31 are arranged on the two sides of the base portion 46. Hook-and-loop fasteners 55 for the hood are arranged near the studs 54 and coupled to hook-and-loop fasteners of the hood.

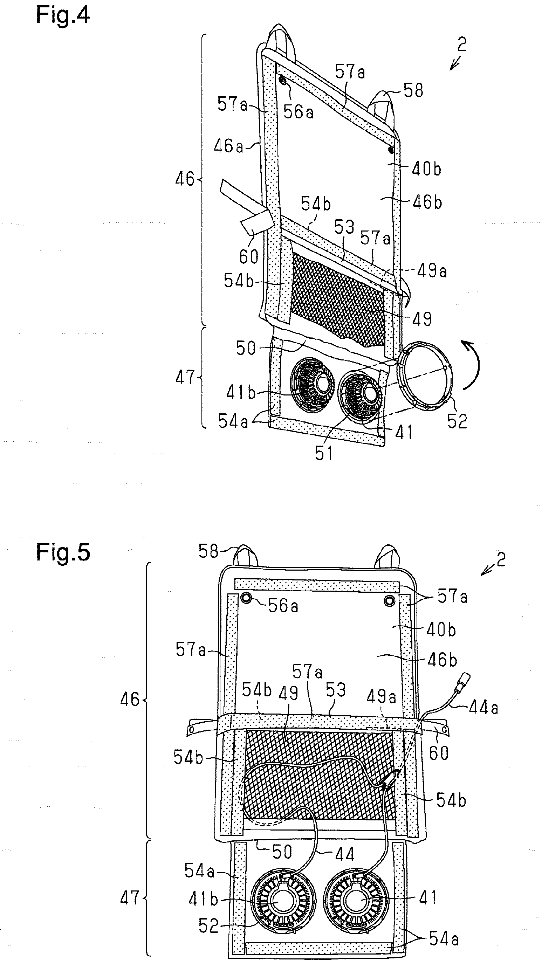

Fig. 4 shows the inner surface 40b of the fan unit bag 2. The protruding portion 41b of the fan unit 41 protrudes from the other surface of the base portion 46, namely, the second surface 46b. Ring members 52 are attached to the second surface 46b. The ring members 52 are fixed to the rims of the protruding portion 41b with the edges defining the attachment holes 51 held in between. Thus, each fan unit 41 is arranged with the flat portion 41a facing the first surface 46a of the base portion 46 (see Fig. 3), and the protruding portion 41b facing the second surface 46b (see Fig. 4).

As illustrated in Fig. 5, jacks, to which terminals of the output cable 44 can be connected, are arranged on the upper sides of the fan units 41 received in the attachment holes 51. The output cable 44 is arranged in the storage cover 49, with the terminals connected to the jacks, and connected to a connector 44a that extends out of the cable opening 49a and is further connected to the battery pack 43. The first surface 46a includes a cord cover 45 that holds the output cable 44 above the cable opening 49a.

With the fan units 41 attached to the fan attaching portion 47, the second surface 46b of the base portion 46 is folded from the bent part 50. This positions the distal end of the fan attaching portion 47 on the upper edge of the storage cover 49. The upper edge of the storage cover 49 includes a shroud 53 that covers the distal end of the fan attaching portion 47, which is folded from the bent part 50. The shroud 53 has an open lower end to allow for insertion of the distal end of the fan attaching portion 47.

A male or female hook-and-loop fastener 54a, which serves as the fan fastener, extends along the peripheral part of the fan attaching portion 47 excluding the bent part 50. A hook-and-loop fastener 54b corresponding to the hook-and-loop fastener 54a extends along the peripheral part of the storage cover 49 excluding the bent part 50. The hook-and-loop fastener 54b is also provided inside the shroud 53.

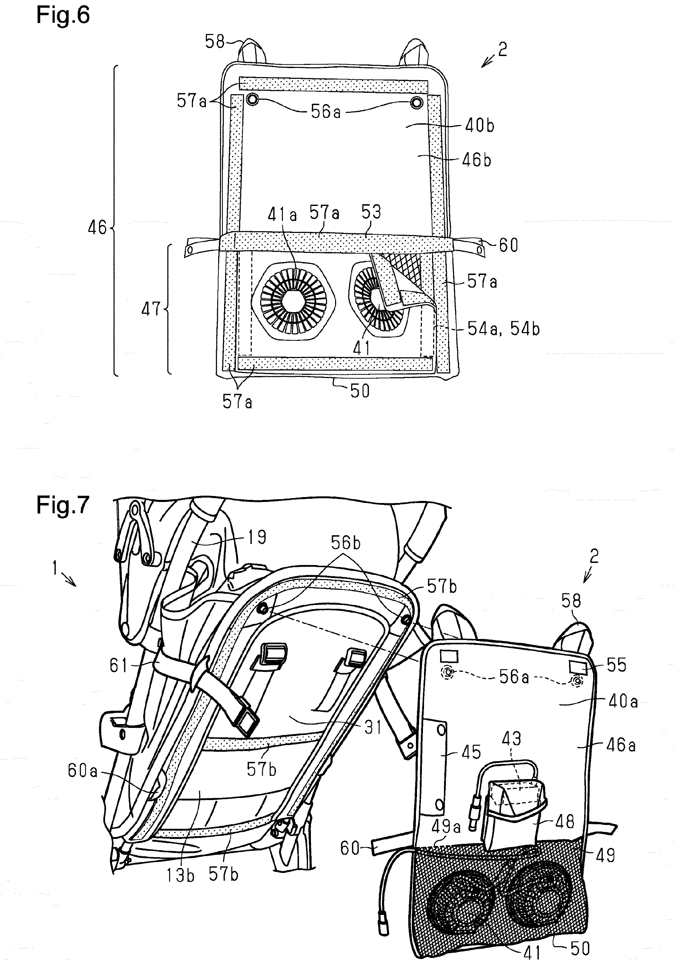

As illustrated in Fig. 6, when the second surface 46b of the base portion 46 is folded from the bent part 50, the distal end of the fan attaching portion 47 is forced into the shroud 53. This couples the hook-and-loop fastener 54a and the hook-and-loop fastener 54b. In this manner, the fan unit bag 2 is formed prior to attachment to the backrest 13b. In this state, the fan unit bag 2 is attached to the rear surface of the backrest 13b.

The four sides on the peripheral part of the second surface 46b of the base portion 46 are provided with male or female hook-and-loop fasteners 57a forming the fastener. The hook-and-loop fastener 57a is also arranged on the surface of the shroud 53. The hook-and-loop fastener 57a is coupled to a corresponding hook-and-loop fastener 57b arranged on the base sheet 31. That is, the hook-and-loop fastener 57a is arranged on the inner surface 40b on four sides surrounding a first region where the fan unit 41 is supported (region where the fan attaching portion 47 and the storage cover 49 overlap) and four sides surrounding a second region outside the first region (region above first region). In other words, the hook-and-loop fastener 57a is provided at the peripheral part (four sides) of the inner surface 40b and an intermediate portion, where the shroud 53 is located, extending between two vertical edges of the inner surface 40b.

Further, the upper corners of the second surface 46b include base fastening eyelets 56a coupled to studs 56b of the base sheet 31.

As illustrated in Fig. 7, the hook-and-loop fasteners 57b are arranged on the rear surface of the base sheet 31 of the backrest 13b at the four sides of the peripheral part in correspondence with the hook-and-loop fasteners 57a. The studs 56b are arranged on the upper corners of the back surface of the base sheet 31 in correspondence with the base fastening eyelets 56a. When a buckle of a reclining belt 61 extending from a longitudinal frame of the handle 19 is unbuckled, the fan unit bag 2 is arranged with the inner surface 40b facing the base sheet 31. Then, the hook-and-loop fasteners 57a and 57b are coupled, and the base fastening eyelet 56a and the stud 56b are coupled. This arranges the fan base 42 of the fan unit bag 2 adjacent to the base sheet 31.

As illustrated in Fig. 8, the coupling belts 59 of the inner sheet 32 are passed through the loops 58, and eyelets of the coupling belts 59 are coupled to the studs 54. The base coupling belts 60 are passed through and coupled to the loops 60a of the base sheet 31. Further, the output cable 44 is extended out of the cable opening 49a and held by the cord cover 45 between the cable opening 49a and the battery pack 43, which is stored in the pocket 48. The connector 44a is connected to a cable extending from the battery pack 43. The cord cover 45 is coupled to an edge of the base portion 46 and covers the output cable 44. In this manner, the fan unit bag 2 is stably attached in a removable manner to the rear side of the backrest 13b. In this state, the flat portions 41a of the two fan units 41 face the base sheet 31 and the air permeable portion 37 of the inner sheet 32 through the base sheet 31.

The operation of the stroller 1 and the fan unit bag 2 will now be described.

The stroller 1 carries the occupant seated on the seating unit 13 in a state in which the back of the occupant rests on the inner sheet 32 of the backrest 13b regardless of the height of the occupant. When this state continues, the air near the back or head of the occupant becomes hot and moist, and the riding comfort on the cushion 35 of the backrest 13b gradually deteriorates.

As illustrated in Fig. 9, when the fan unit bag 2 is attached to the backrest 13b, the flat portion 41a of each fan unit 41 faces the backrest 13b at the air permeable portion 37 in the backrest portion 34 of the inner sheet 32 through the base sheet 31. When the fan units 41 are driven in this state, the fan units 41 function to draw air through the flat portions 41a and discharge air from the protruding portions 41b. This draws moisture and hot air from around the back and head of the occupant through the air permeable sheet 36a of the cover 36 into the cushion 35. Then, the moisture and hot air in the cushion 35 are discharged through the air permeable portion 37 in the low air permeability sheet 36b and the air permeable base sheet 31 toward the rear of the stroller 1 by the fan units 41.

The stroller 1 has the advantages described below.
(1) The fan unit bag 2 is easily attached in a removable manner to the backrest 13b. That is, the fan unit bag 2 can be easily attached to the backrest 13b when required such as during the summer. At other times, the fan unit bag 2 can be easily removed from the backrest 13b. When the fan unit bag 2 is attached to the backrest 13b, moisture and hot air can be released from the backrest 13b by driving the fan unit 41. This cools the body of the occupant.
(2) The fan units 41 can be stably attached to the stroller 1 by attaching the fan unit bag 2. Thus, vibrations produced when the stroller is moving or changes in the direction of the generated air current will not occur. This ensures that the occupant will be cool.
(3) In the fan unit bag 2, the fan base 42, serving as a base material, is formed by a sheet having low air permeability except at the portion where the fan units 41 are attached. This efficiently discharges air from the fan unit 41.
(4) The fan unit bag 2 is coupled to the base sheet 31 by the hook-and-loop fasteners 57a and 57b serving as fasteners at the peripheral part of the inner surface 40b. This makes the space between the base sheet 31 and the fan unit bag 2 around the flat portion 41a of the fan unit 41 airtight and increases the efficiency for discharging air through the fan units 41.
(5) The fan unit bag 2 is coupled to the base sheet 31 by the hook-and-loop fasteners 57a and 57b. Therefore, the fan unit bag 2 is more airtight than when the fan unit bag 2 is coupled to the base sheet 31 by buttons, hooks, or the like.
(6) In the backrest portion 34 of the inner sheet 32, the cushion 35 is a high-repulsion cushion. A high-repulsion cushion is more repulsive than a normal cushion formed by a normal non-woven fabric because of the many voids included that results in high air permeability. Therefore, even if air is drawn into the air permeable portion 37 that is located below the backrest portion 34, the air around the head of the occupant that is relatively far from the air permeable portion 37 can also be drawn toward the air permeable portion 37.
(7) The inner sheet 32 including the cushion 35 is arranged on the backrest 13b and improves the riding comfort. Moisture and hot air is discharged from the cushion 35 by the fan unit bag 2.
(8) The surface of the cover 36, which covers the cushion 35, at the side facing the base sheet 31 is formed by the low air permeability sheet 36b including the air permeable portion 37 where the fan unit 41 is arranged. Therefore, air is efficiently discharged from the cushion 35 through the air permeable portion 37. The surface facing the base sheet 31 is formed from the sheet 36b having low air permeability except for the air permeable portion 37 and keeps the seating unit 13 warm under cold conditions such as during the winter when the fan unit bag 2 is removed.
(9) Regardless of size such as height of the occupant, at least part of the back of the occupant will rest on a position between the lower portion of the backrest 13b and the lowermost slits 22, which is where the shoulder belts 21 are extracted from. The fan units 41 are arranged at such a position. Therefore, air is efficiently discharged from the cushion 35 by the fan units 41.
(10) The air permeable portion 37 of the low air permeability sheet 36b is located between the lower portion of the backrest 13b and the extracted position of the shoulder belts 21. This efficiently discharges air out of the cushion 35.
(11) The fan attaching portion 47, with the fan units 41 attached thereto, is simply folded toward the base portion 46 to easily attach the fan units 41 to the fan base 42 and position the fan units 41 in correspondence with the air permeable portion 37.
(12) The hook-and-loop fasteners 54a and 54b serving as fan fasteners couple the fan attaching portion 47 and the base portion 46. This makes the space surrounding the flat portion 41a of the fan unit 41 between the base sheet 31 and the fan unit bag 2 airtight and improves the efficiency for discharging air through the fan units 41.
(13) The fan attaching portion 47 is coupled to the base portion 46 by the hook-and-loop fasteners 54a and 54b. Therefore, the fan attaching portion 47 is more airtight than when the fan attaching portion 47 is coupled to the base portion 46 by buttons, hooks, or the like.
(14) The hook-and-loop fasteners 57a and 57b are provided not only on the outer peripheral part of the inner surface 40b but also on the shroud 53, which is an intermediate section extending between two vertical edge of the inner surface 40b. Therefore, the fan unit bag 2 is more firmly attached to the backrest 13b, and the surrounding of the fan units 41 are more airtight.
(15) In addition to the hook-and-loop fasteners 57a and 57b, the base sheet 31 and the fan unit bag 2 are coupled by the base fastening eyelets 56a, the studs 56b, and passage of the base coupling belts 60 through the loops 60a. Furthermore, the fan unit bag 2 and the inner sheet 32 are coupled to each other by passing the coupling belts 59 through the loops 58. Thus, the fan unit bag 2 is coupled to both of the base sheet 31 and the inner sheet 32. That is, the fan unit bag 2 is coupled to two members. Therefore, even if the fan unit bag 2 is separated from the base sheet 31, the fan unit bag 2 remains coupled to the inner sheet 32. Further, even if the fan unit bag 2 is separated from the inner sheet 32, the fan unit bag 2 remains coupled to the base sheet 31. Thus, the fan unit bag 2 will resist undesirable separation from the backrest 13b.
(16) Even if the stroller 1, to which the fan unit bag 2 is attached, is of a type with the base sheet 31 and the inner sheet 32 of the backrest 13b having air permeability, the fan base 42 is formed by a low air permeability sheet. Thus, moisture and hot air can be discharged efficiently from the backrest 13b by the fan units 41. That is, even in a stroller in which the base sheet 31 has air permeability and the cover of the inner sheet 32 (surface that occupant rests on and the surface facing base sheet 31) has air permeability, the fan unit bag 2 efficiently discharges air from the backrest 13b.
(17) The fan units 41 are arranged near the battery pack 43. This facilitates the wiring of the output cable 44. Further, the output cable 44 held by the cord cover 45 does not hinder movement of the stroller 1.
(18) The fan unit 41 includes the flat portion 41a at the side facing the backrest 13b. Therefore, even if the fan unit 41 comes into contact with the back of the occupant on the seating unit 13 due to vibration or the like when the stroller 1 is moving, the back will contact the flat portion 41a, not the protruding portion 41b. Thus, the riding comfort will not be adversely affected.

The stroller may be modified as described below.

The number of fans attached to the fan unit bag 2 may be one, three, or more.

The fan unit 41 may be attached so that the protruding portion 41b faces the backrest 13b.

The form of the fan unit 41 is not particularly limited. For example, the two surfaces of the fan unit 41 may both include the protruding portion 41b or both include the flat portion 41a.

The battery pack 43 does not have to be stored in the pocket 48. When the pocket 48 is not provided, the battery pack 43 may be stored in the storage portion 15 below the seating unit 13. Alternatively, the battery pack 43 may be held by the operator or stored in a bag or the like hung on the handle 19 or the like.

The base sheet 31 may be a continuous sheet of the seat 13a and the backrest 13b or may be separate sheets of the seat 13a and the backrest 13b. Furthermore, when the seat 13a is formed by a plate such as a seat plate, the base sheet 31 includes only the backrest 13b.

The fan unit bag 2 may be coupled only to the base sheet 31 or only to the inner sheet 32. Furthermore, the fan unit bag 2 may be directly coupled to the frame of the backrest 13b.

The base sheet 31 does have not have to be flexible as long as it is air permeable. The base sheet 31 may be air permeable only at a position facing the fan units 41 and other portions may have low air permeability.

The fan attaching portion 47 may be coupled to the base portion 46 by buttons, hooks, or the like without using the hook-and-loop fasteners 54a and 54b or in combination with the hook-and-loop fasteners 54a and 54b. A line fastener may be used instead of the hook-and-loop fasteners 54a and 54b.

The fan attaching portion 47 does not have to folded onto the side of the second surface 46b of the base portion 46 and may be folded onto the side of the first surface 46a.

The fan attaching portion 47 may be omitted. In this case, in the base portion 46, the region of the storage cover 49 may be a low air permeability region provided with the attachment holes 51 that receive the fan units 41. This will expose the protruding portions 41b of the fan units 41 but simplify the structure of the fan unit bag 2.

In the inner sheet 32, the location of the air permeable portion 37 is not particularly limited as long as it is in the backrest portion 34 and lower than the lowermost slits 22. The air permeable portion 37 may be provided in the backrest portion 34 near the seat portion 33 or at a position spaced apart from the seat portion 33.

The position of the fan units 41 is not particularly limited as long as the fan units 41 are in the backrest portion 34 and lower than the lowermost slits 22. The fan units 41 may be provided in the backrest portion 34 near the seat portion 33 or at a position spaced apart from the seat portion 33.

In the inner sheet 32, the sheet at the side closer to the fan unit bag 2 and the base sheet 31 may also be formed by an air permeable sheet in the same manner as the sheet at the side closer to the occupant. In this case, the fan base 42 of the fan unit bag 2 may be formed by a low air permeability sheet, the entire cover 36 of the inner sheet 32 may be formed by an air permeable sheet, and the base sheet 31 may be formed by an air permeable sheet. That is, the portion corresponding to the low air permeability sheet 36b of the inner sheet 32 may be formed by a air permeable sheet.

The periphery of the air permeable portion 37 and the periphery of the flat portions 41a of the fan units 41 attached to the base portion 46 may be connected by a tube. For example, a tube may be arranged on the inner surface 40b of the fan unit bag 2 (second surface 46b of the base portion 46) so as to surround the two fan units 41. When the fan unit bag 2 is attached to the rear of the backrest 13b, the distal end of the tube abuts against the periphery of the air permeable portion 37 through the base sheet 31. This rectifies the flow of the drawn in air and discharges air from the cushion 35 more efficiently when driving the fan unit 41. The tube can be elastic to increase adhesion with the base sheet 31 and the low air permeability sheet 36b around the air permeable portion 37 and soften contact with the back of the occupant.

The hook-and-loop fasteners 57a and 57b for attaching the fan unit bag 2 to the base sheet 31 may be provided at positions where the hook-and-loop fastener 57a on the surface of the shroud 53 and the corresponding hook-and-loop fastener 57b are located upward from the shroud 53. The hook-and-loop fastener 57a provided in the intermediate section between the two vertical edges of the inner surface 40b and the corresponding hook-and-loop fastener 57b may be omitted.

The fan unit bag 2 may be coupled to the base portion 46 by buttons, hooks, or the like without using the hook-and-loop fasteners 57a and 57b or may be used in combination with the hook-and-loop fasteners 57a and 57b. Line fasteners may be used instead of the hook-and-loop fasteners 57a and 57b.

As long as the hook-and-loop fasteners 57a and 57b surround the fan unit 41, the hook-and-loop fasteners 57a and 57b do not have to be arranged in the pattern of the above-described example. Nevertheless, it is preferable that the hook-and-loop fasteners be arranged so that the base sheet 31 does not droop from the backrest 13b.

The storage cover 49 may be a mesh sheet other than a net as long as it is air permeable. The storage cover 49 may be omitted.

In the stroller 1, the fan unit bag 2 may be arranged on the lower surface of the seat 13a. In this case, in the seat portion 33 of the inner sheet 32, the inner and outer sheets may be formed by air permeable sheets. The sheet at the side of the base sheet 31 may be formed by a low air permeability sheet, and the air permeable portion 37 having high air permeability may be located at a position opposing the fan unit 41. In the stroller 1, the fan unit bag 2 for the backrest may be attachable to the backrest 13b, and the fan unit bag conforming to the size of the seat 13a may also be attachable to the seat 13a.

The user is not limited to an infant and may be an adult. The body supporting device may be a foldable or non-foldable chair, a sofa, a wheelchair, a vehicle seat, any of various types of beds, a mattress, or the like used by infants and adults. The present invention is also applicable to a pet cart that carries a pet such as a dog or a cat.

The fan unit bag may be attached to the backrest of a chair, a sofa, a wheelchair, or the like. Since various types of beds, mattresses, and the like are used by the user in a lying posture, the fan unit bag is only required to be attached to a position at the lower side of the body in the lying state.

Further, the fan unit bag may be attached to the rear side of a floor surface of the body support on where the pet is carried in the pet cart.

### REFERENCE SIGNS LIST

1) stroller
2) fan unit bag
13) seating unit
13a) seat
13b) backrest
31) base sheet
32) inner sheet
35) cushion
36) cover
36a) air permeable sheet
36b) low air permeability sheet
37) air permeable portion
41) fan unit
41a) flat portion
41b) protruding portion
42) fan base
47) fan attaching portion
50) bent part
54a, 54b) hook-and-loop fastener
57a, 57b) hook-and-loop fastener

## Claims

1. A body supporting device including a body support, the body supporting device comprising:
a fan unit bag attached in a removable manner to a rear side of the body support, wherein the fan unit bag includes
a fan unit that draws air from the body support,
a fan base that supports the fan unit so that the fan unit faces the body support, the fan base being a sheet having low air permeability, and
a fastener that attaches the fan base in a removable manner to the body support, the fastener being arranged to surround the fan unit.

2. The body supporting device according to claim 1, wherein:
the body support includes a backrest;
the backrest includes an inner sheet located closer to a body than the fan unit bag, and
the inner sheet includes
a cushion that supports a back or a head, and
a cover that covers the cushion.

3. The body supporting device according to claim 2, wherein;
the cover includes a sheet that is located at a side closer to the body and formed by an air permeable sheet and a sheet located at a side closer to the fan unit bag and formed by a low air permeability sheet;
the low air permeability sheet includes a region defining an air permeable portion where air permeability is higher than the low air permeability sheet; and
when the fan unit bag is attached to the backrest, the fan unit is arranged facing the air permeable portion.

4. The body supporting device according to claim 3, wherein
the backrest is located toward a rear side of the body supporting device from a seat and includes a shoulder belt, and
in a state where the fan unit bag is attached to the backrest, the fan unit is located between a lower portion of the backrest and an extracted position of the shoulder belt.

5. The body supporting device according to claim 3, wherein
the backrest is located toward a rear side of the body supporting device from a seat and includes a shoulder belt, and
the air permeable portion is located between a lower portion of the backrest and an extracted position of the shoulder belt.

6. The body supporting device according to any one of claims 1 to 5, wherein:
the fan base includes
a base portion, and
a fan attaching portion to where the fan unit is attached; and
the fan attaching portion is folded toward the base portion, with the fan unit attached thereto, and fixed to the base portion.

7. The body supporting device according to claim 6, wherein:
a peripheral part of the fan attaching portion, excluding a bent part bordering the base portion, includes a fan fastener that fastens the fan attaching portion to the base portion.

8. The body supporting device according to any one of claims 1 to 7, wherein the fan base includes the fastener at a peripheral part of a surface facing the body support and at an intermediate portion extending between two vertical edges on the surface facing the body support.

9. The body supporting device according to any one of claims 1 to 8, wherein:
the body support includes a base sheet attached to a frame of the body support,
the base sheet is an air permeable sheet, and
the fan unit bag is attached so that the fan base is adjacent to the base sheet.

10. The body supporting device according to claim 2, wherein:
the backrest includes a base sheet attached to a frame of the body support,
the inner sheet is arranged at a side of the base sheet that is closer to the body, and
the fan unit bag is coupled to the inner sheet and the base sheet.

11. The body supporting device according to any one of claims 1 to 10, wherein
the fan unit includes a flat portion and a protruding portion protruding opposite the flat portion, and
the fan unit is arranged so that the flat portion faces the body support when the fan unit bag is attached to the body support.

12. A fan unit bag attached to a body support of a body supporting device, the fan unit bag comprising:
a fan unit that draws air from the body support;
a fan base that supports the fan unit so that the fan unit faces the body support, the fan base being a low air permeability sheet; and
a fastener that attaches the fan base in a removable manner to the body support, the fastener being arranged to surround the fan unit.
